# EUROPÄISCHE PATENTSCHRIFT

(11) **EP 1 431 124 B1**
(45) Veröffentlichungstag und Bekanntmachung des Hinweises auf die Patenterteilung: **12.04.2006**
(21) Anmeldenummer: 03029255.1
(22) Anmeldetag: 17.12.2003
(51) Int. Cl.: B60R 9/058

(54) **Halteelement zum Befestigen eines Dachlastträgers**
Fixing element for attaching a roof rack
Elément de retenue pour attacher un porte-bagages de toit

(30) Priorität: 19.12.2002 DE 10259430
(43) Veröffentlichungstag der Anmeldung: 23.06.2004
(73) Patentinhaber: ADAM OPEL AG, 65423 Rüsselsheim (DE)
(72) Erfinder: Mathes, Bernhard, 65428 Rüsselsheim (DE); Stahlhut, Richard, 63075 Offenbach (DE); Stever, Tobias, 65428 Rüsselsheim (DE)

(56) Entgegenhaltungen:
- EP-A- 0 325 876
- EP-A- 0 638 462
- WO-A-03/095270
- DE-A- 3 809 196
- DE-A- 4 105 741
- US-A- 4 475 765

## Beschreibung

Die Erfindung bezieht sich auf ein Halteelement zum Befestigen eines Dachlastträgers an einem Fahrzeugdach mit einem am Fahrzeugdach dauerhaft befestigten Fuß und einem Kopf, der zum temporären Halten des Dachlastträgers eingerichtet ist, und mit den weiteren Merkmalen des Oberbegriffs des Anspruches 1.

Zum Befestigen eines Dachlastträgers an einem Fahrzeugdach sind die unterschiedlichsten Systeme bekannt. In der Regel weist der Dachlastträger einen am Fahrzeugdach anliegenden Stützfuß und eine ein Karosserieteil hintergreifende Klammer auf.

Bei Fahrzeugen älteren Baujahres handelt es sich bei dem Karosserieteil um eine seitlich vom Dach abstehende Regenablaufrinne. Der Stützfuß ist schwertartig ausgebildet und befindet sich in der Regenablaufrinne, während die Klammer diese von unten untergreift und mittels einer Spannvorrichtung gegen ihre Unterseite gespannt wird. Bei Fahrzeugen modernerer Bauart ist die Regenablaufrinne im Fahrzeugdach in Form eines Dachkanals integriert. Zum Befestigen eines Dachlastträgers werden dort Halteelemente befestigt, die einen Kopf aufweisen, die von einem Haken am Stützfuß des Dachlastträgers hintergriffen werden. Ein Beispiel für diese Ausführung kann der DE 100 09 789 A1 entnommen werden. Ein anderes Beispiel findet sich in der DE 198 53 321 A1. Die Hakenverbindung hat den Vorteil, dass der Dachlastträger schnell und einfach montiert werden kann. Der Stützfuß des Dachlastträgers braucht lediglich in den Dachkanal eingesetzt zu werden und anschließend der Haken umgelegt zu werden.

Dieser Vorteil wird aber mit dem Nachteil erkauft, dass diese Verbindung in Einzelfällen bei sehr hohen Belastungen möglicherweise nicht ausreichend ist. Solche Belastungen treten auf, wenn der Dachlastträger überladen ist und das Fahrzeug in einen Unfall verwickelt wird, so dass starke Verzögerungskräfte ruckartig auftreten.

Die Erfindung beruht daher auf der Aufgabe, ein Halteelement zur Befestigung eines Dachlastträgers an einem Fahrzeugdach zu schaffen, das noch eine hinreichend einfache Montage erlaubt, andererseits aber auch in Extremsituationen den Dachlastträger sicher am Dach des Fahrzeuges hält.

In der gattungsbildenden US 4,475,765 ist offenbart, dass der Kopf ein Gewinde aufweist, in das zur temporären Befestigung des Dachlastträgers ein den Dachlastträger haltender Gewindebolzen einschraubbar ist.

Mit einer Schraubverbindung wird eine extrem belastbare Verbindung geschaffen, die zwar keine rasche Montage erlaubt, wie bei einer Hakenverbindung nach dem Stand der Technik, trotzdem aber noch relativ leicht zu montieren ist.

Zur dauerhaften Befestigung des Halteelementes am Fahrzeugdach weist der Fuß gemäß der US 4,475,765 einen Kragen und ein Gewinde auf, auf das ein Befestigungsmittel aufgeschraubt wird, bis die Unterseite des Kragens zur Anlage an die Dachaußenseite gelangt.

Die Erfindung beruht auf dem Problem, das Einsetzen des Halteelementes am Dach zu vereinfachen.

Dazu verfügt der Fuß erfindungsgemäß über eine Verdrehsicherung, um ein Mitdrehen des Halteelementes beim Aufschrauben des Befestigungsmittels zu verhindern. Vorzugsweise handelt es sich bei der Verdrehsicherung um einen mehrkantigen, am besten um einen sechskantigen Abschnitt des Fußes, der in ein entsprechend geformtes Loch im Fahrzeugdach eintaucht.

Vorzugsweise weist die Unterseite des Kragens eine um die Gewindeachse umlaufende Nut auf, in der ein Dichtring liegt. Dieser Dichtring kommt zur Anlage an die Dachaußenseite und schließt das Durchgangsloch für das Gewinde wasserdicht ab.

Ein besonderer Nachteil der Dachlastbefestigung gemäß den oben genannten Offenlegungsschriften besteht darin, dass der Hinterschnitt für den Haken seitlich der Schraubverbindung mit dem Dach angesetzt ist, so dass bei einer Belastung der Verbindung eine hebelartig verstärkte Kraft auf die Verbindung mit dem Dach ausgeübt wird. Um eine solche zu vermeiden, sieht die Erfindung vor, dass die beiden Gewinde am Halteelement koaxial zueinander ausgerichtet sind.

Eine Belastung der temporären Befestigung des Dachlastträgers am Kopf führt zu einer direkten und nicht mittels eines Hebels verstärkten Belastung der dauerhaften Befestigungen des Fußes am Dach. Dies ist u. a. der Grund dafür, warum trotz hoher Belastung die Befestigung des Dachlastträgers am Dach erhalten bleibt.

Zur weiteren Vereinfachung der Befestigung ist vorgesehen, dass das Gewinde am Fuß ein Außengewinde und das Befestigungselement eine Mutter ist.

Um den Dachlastträger am Kopf des Halteelements orientiert befestigen zu können, ist vorgesehen, dass der Kopf ebenfalls einen mehrkantigen Querschnitt aufweist. Dabei ist vorzugsweise das Gewinde am Kopf ein Innengewinde. Bei dem Befestigungsbolzen handelt es sich demnach um eine Schraube, die von entsprechenden Einrichtungen am Stützfuß des Dachlastträgers gehalten in das Innengewinde eingeschraubt wird.

Um zu vermeiden, dass die Bohrung mit dem Innengewinde bei Nichtbenutzung mit Wasser gefüllt wird und das Innengewinde anrostet, ist vorgesehen, dass in der Bohrung ein entfernbarer Verschluss eingesetzt ist, der die Bohrung wasser- und feuchtigkeitsdicht verschließt. Hierbei kann es sich um einen Stöpsel handeln. Häufig besitzt der Dachkanal einen Deckel. Das Verschlusselement kann an der Unterseite dieses Deckels angebracht sein, so dass, wenn der Dachkanal durch den Deckel verschlossen ist, gleichzeitig auch die Bohrung geschlossen ist.

Im Folgenden wird anhand eines Ausführungsbeispiels die Erfindung näher erläutert. Dazu zeigen
- Fig. 1: ein Halteelement in einer Ansicht von oben;
- Fig. 2: dasselbe Halteelement in einer Ansicht von unten;
- Fig. 3: ein Halteelement eingebaut in den Dachkanal eines Fahrzeuges und
- Fig. 4: den Fuß eines Dachgepäckträgers, der mit Hilfe des Halteelementes am Dach des Fahrzeuges befestigt ist.

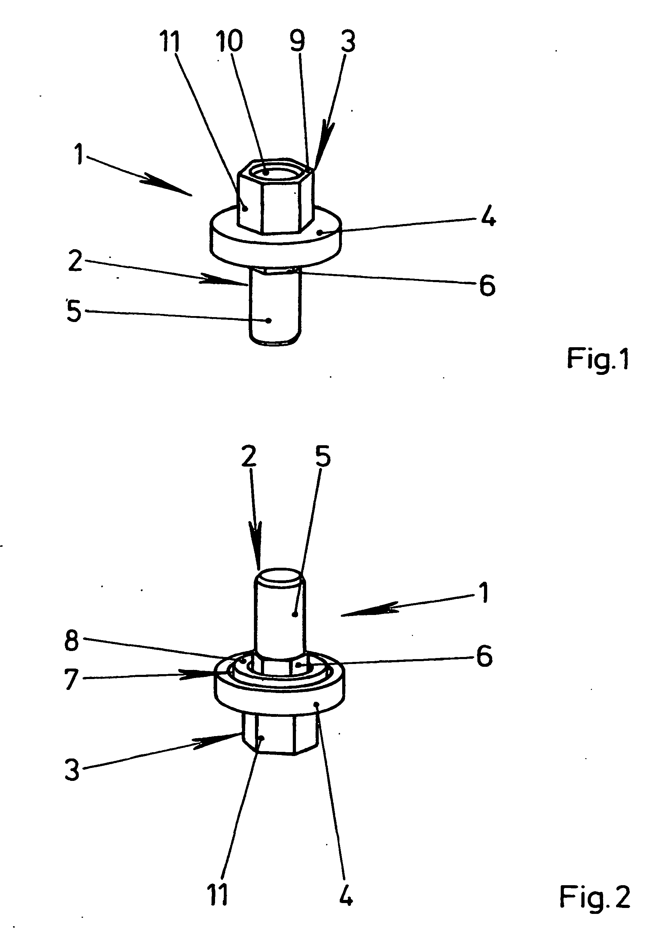

Wie den Figuren 1 und 2 zu entnehmen ist, besteht das Halteelement 1 aus einem Fuß 2 und einem Kopf 3, zwischen denen sich radial ein Kragen 4 erstreckt. Bei dem Fuß 2 handelt es sich im Wesentlichen um einen Bolzen mit einem Außengewinde 5, der nahe dem Kragen 4 in einen Sechskant 6 übergeht. An der dem Sechskant 6 zugewandten Seite des Kragens 4 befindet sich eine umlaufende Nut 7, in der ein Dichtring 8 liegt.

Auf der anderen Seite des Kragens 4 befindet sich in einer koaxialen Verlängerung zum Außengewinde 5 am Fuß 2 ein Bolzen 9 mit einem Innengewinde 10 und einem im Querschnitt sechskantigen Außenprofil 11.

Zum Befestigen des Halteelementes am Dach wird das Halteelement 1 in ein entsprechend geformtes Loch am Dach eingesetzt, so dass es gegen ein Verdrehen gesichert dort liegt. Die Höhe des Sechskantes ist nicht größer als die Tiefe des Loches, so dass auf das Außengewinde 5 des Fußes 2 eine Mutter aufgeschraubt werden kann, wobei der Kragen 4 bzw. der Dichtring 8 zur Auflage an der Außenseite des Daches gelangt. Das Halteelement wird dauerhaft in einem Dachkanal im Dach des Fahrzeuges befestigt, so dass sich der Kopf 3 innerhalb des Dachkanals befindet, der von einem Deckel verschlossen ist, solange kein Dachlastträger montiert wird.

Zum Montieren des Dachlastträgers wird zunächst der Deckel entfernt und dann der Stützfuß des Dachlastträgers in den Dachkanal eingesetzt, wobei der Fuß mittels des Sechskantes am Kopf 3 ausgerichtet wird. Durch Einschrauben eines Gewindebolzens, der am Fuß des Dachlastträgers geführt bzw. gehalten ist, in das Innengewinde wird eine temporäre, hoch belastbare Verbindung zwischen dem Fuß und dem Halteelement geschaffen.

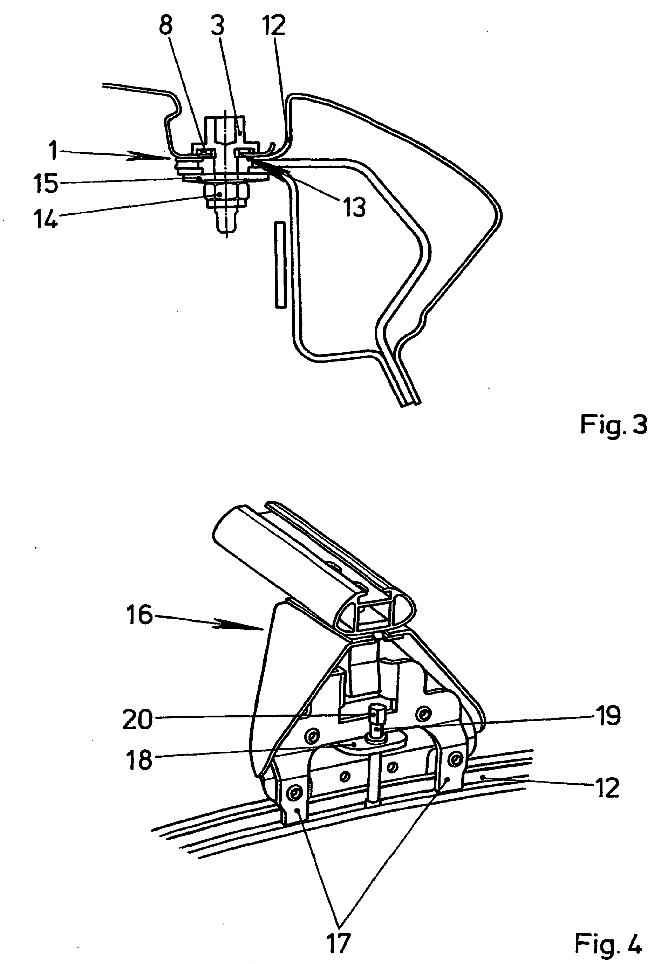

Dies ist näher in der Fig. 3 dargestellt, die einen Dachkanal 12 mit einem darin befestigten Halteelement 1 zeigt. Dazu befindet sich im Boden des Dachkanals eine Öffnung 13, durch die der Fuß 2 hindurchgeführt und mit einer Mutter 14 befestigt ist. Zwischen der Mutter 14 und der Unterseite des Bodens befindet sich eine Unterlegscheibe 15 mit einem gegenüber der Mutter 14 deutlich größeren Durchmesser, um eine möglichst große flächenmäßige Abstützung der Verzögerungskräfte, wie sie bei einem Unfall auftreten, zu erreichen. Der Dichtring 8 an der Oberseite des Bodens des Dachkanals 12 dichtet die Öffnung 13 ab.

Fig. 4 zeigt die Befestigung des Stützfußes 16 eines Dachgepäckträgers im Dachkanal 12. Der Stützfuß 16 weist dazu zwei Stecklaschen 17 auf, die in den Dachkanal eintauchen und auf dessen Boden aufsitzen. Im Stützfuß 16 befindet sich weiter eine Querstrebe 18 mit einer Öffnung, in der sich ein langer Schraubbolzen 19 befindet. Der Stützfuß 16 wird nun so positioniert, dass der Schraubbolzen 19 sich oberhalb des Halteelementes 1 befindet und in das Innengewinde 10 im Kopf 3 des Halteelementes 1 eingeschraubt werden kann. Der Kopf 20 des Schraubbolzens 19 befindet sich dabei in einem seitlich zugänglichen Bereich des Stützfußes 16, der, nachdem der Dachgepäckträger befestigt worden ist, durch eine hier nicht dargestellte Kappe verschlossen wird. Diese kann durch ein Schloss gesichert sein, so dass der Schraubbolzen 19 nicht durch Unbefugte gelöst werden kann.

## Patentansprüche

1. Halteelement zum Befestigen eines Dachlastträgers an einem Fahrzeugdach mit einem am Fahrzeugdach dauerhaft befestigbaren Fuß (2) und einem Kopf (3), der zum Halten des Dachlastträgers eingerichtet ist, wobei der Kopf (3) ein Gewinde (10) aufweist, in das zur temporären Befestigung des Dachlastträgers ein Gewindebolzen einschraubbar ist, wobei zur dauerhaften Befestigung des Halteelementes am Fahrzeugdach der Fuß (2) einen Kragen (4) und ein Gewinde (5) aufweist, auf das ein Befestigungsmittel aufgeschraubt ist, wodurch die Unterseite des Kragens zur Anlage an die Dachaußenseite gelangt, **dadurch gekennzeichnet, dass** der Fuß (2) über einen mehrkantigen Abschnitt (6) verfügt, der in ein entsprechend geformtes Loch im Fahrzeugdach eintaucht und der somit als Verdrehsicherung fungiert, um ein Mitdrehen des Halteelementes (1) beim Aufschrauben des Befestigungsmittels zu verhindern.

2. Halteelement nach Anspruch 1, **dadurch gekennzeichnet, dass** die Verdrehsicherung ein sechskantiger Abschnitt (6) des Fußes (2) ist.

3. Halteelement nach Anspruch 1 oder 2, **dadurch gekennzeichnet, dass** an der Unterseite des Kragens (4) eine um die Gewindeachse umlaufende Nut (7) verläuft, in der ein Dichtring (8) liegt.

4. Halteelement nach Anspruch 1, 2 oder 3, **dadurch gekennzeichnet, dass** die beiden Gewinde (5, 10) am Halteelement (1) koaxial zueinander ausgerichtet sind.

5. Halteelement nach Anspruch 1, **dadurch gekennzeichnet, dass** das Gewinde am Fuß ein Außengewinde (5) und das Befestigungselement eine Mutter ist.

6. Halteelement nach einem der vorhergehenden Ansprüche, **dadurch gekennzeichnet, dass** der Kopf (3) ein mehrkantiges Außenprofil (11) aufweist.

7. Halteelement nach Anspruch 1, **dadurch gekennzeichnet, dass** das Gewinde am Kopf (3) ein Innengewinde (10) ist.

8. Halteelement nach Anspruch 7, **dadurch gekennzeichnet, dass** in der Bohrung mit dem Innengewinde (10) ein entfernbarer Verschluss eingesetzt ist, der die Bohrung wasser- und feuchtigkeitsdicht verschließt.

9. Halteelement nach Anspruch 8, **dadurch gekennzeichnet, dass** das Verschlusselement an der Unterseite eines einen Dachkanal verschließenden Deckels angeordnet ist.

## Claims

1. A fixing element for attaching a roof rack to a vehicle roof and comprising a foot (2) that is adapted to be permanently fixed to the vehicle roof and a head (3) which is arranged for holding the roof rack, wherein the head (3) has a thread (10) into which a threaded stud is adapted to be screwed for the temporary attachment of the roof rack, and wherein for the permanent attachment of the fixing element to the vehicle roof, the foot (2) comprises a collar (4) and a thread (5) onto which an attachment means is screwed whereby the lower surface of the collar comes into contact with the outer surface of the roof, **characterized in that** the foot (2) is provided with a multi-sided section (6) which extends into a correspondingly shaped hole in the vehicle roof and thus functions as an anti-rotation means in order to prevent the fixing element (1) from rotating therewith when the attachment means is being screwed on.

2. A fixing element in accordance with Claim 1, **characterized in that** the anti-rotation means is a hexagonal section (6) of the foot (2).

3. A fixing element in accordance with Claim 1 or 2, **characterized in that** the lower surface of the collar (4) incorporates a groove (7) which surrounds the thread axis and in which is located a sealing ring (8).

4. A fixing element in accordance with Claim 1, 2 or 3, **characterized in that** the two threads (5, 10) on the fixing element (1) are aligned mutually coaxially.

5. A fixing element in accordance with Claim 1, **characterized in that** the thread on the foot is an external thread (5) and the attachment element is a nut.

6. A fixing element in accordance with any of the preceding Claims, **characterized in that** the head (3) has a multi-sided external profile (11).

7. A fixing element in accordance with Claim 1, **characterized in that** the thread on the head (3) is an internal thread (10).

8. A fixing element in accordance with Claim 7, **characterized in that** a removable closure member is inserted in the boring incorporating the internal thread (10) for closing the boring in watertight and damp proof manner.

9. A fixing element in accordance with Claim 8, **characterized in that** the closure element is arranged on the lower surface of a cover which closes a roof channel.

## Revendications

1. Elément de fixation pour fixer une galerie ou autre de charge de toit sur le toit d'un véhicule comprenant un pied (2) susceptible d'être fixé de manière permanente sur un toit de véhicule et une tête (3) laquelle est installée pour maintenir la galerie, la tête (3) comportant un filetage (10), dans lequel est susceptible d'être vissée une tige filetée pour la fixation temporaire de la galerie, et le pied (2) comportant une collerette (4) et un filetage (5) pour la fixation permanente de l'élément de fixation sur le toit du véhicule, sur lequel filetage un moyen de fixation est vissé, de sorte que la face inférieure de la collerette arrive en contact avec la face extérieure du toit, **caractérisé en ce que** le pied (2) comporte un tronçon multipans (6) qui plonge dans un trou formé de manière correspondante dans le toit du véhicule et qui agit de la sorte en tant que moyen de blocage en rotation, pour empêcher que l'élément de fixation (1) ne tourne avec le moyen de fixation au cours du vissage ou dévissage de ce moyen de fixation.

2. Elément de fixation selon la revendication 1, **caractérisé en ce que** le moyen de blocage en rotation est un tronçon à six pans (6) du pied (2).

3. Elément de fixation selon la revendication 1 ou 2, **caractérisé en ce que** la face inférieure de la collerette (4) s'étend sur une rainure ciculaire (7) s'enroulant autour de l'axe du filetage et dans laquelle se trouve une bague d'étanchéité (8).

4. Elément de fixation selon la revendication 1, 2 ou 3, **caractérisé en ce que** les deux filetages (5, 10) sont orientés coaxialement l'un par rapport à l'autre sur l'élément de fixation (1).

5. Elément de fixation selon la revendication 1, **caractérisé en ce que** le filetage au niveau du pied est un filetage extérieur (5), et **en ce que** l'élément de fixation est un écrou.

6. Elément de fixation selon l'une des revendications précédentes, **caractérisé en ce que** la tête (3) présente un profil extérieur polygonal (11).

7. Elément de fixation selon la revendication 1, **caractérisé en ce que** le filetage au niveau de la tête (3) est un filetage intérieur (10).

8. Elément de fixation selon la revendication 7, **caractérisé en ce que**, dans l'alésage muni du filetage intérieur (10) est introduire une fermeture amovible qui obture l'alésage de manière étanche à l'eau et à l'humidité.

9. Elément de fixation selon la revendication 8, **caractérisé en ce que** l'élément de fermeture est disposé sur la face inférieure d'un couvercle fermant un canal de toit.
